(19) Europäisches Patentamt
European Patent Office
Office européen des brevets

(11) Publication number: **0 274 892 B1**

(12) **EUROPEAN PATENT SPECIFICATION**

(45) Date of publication of patent specification: **12.08.92**

(51) Int. Cl.[5]: **A01N 43/40**, //(A01N43/40, 37:46)

(21) Application number: **87311254.4**

(22) Date of filing: **21.12.87**

(54) **Method of killing weeds comprising the use of diflufenican.**

(30) Priority: **23.12.86 GB 8630698**

(43) Date of publication of application: **20.07.88 Bulletin 88/29**

(45) Publication of the grant of the patent: **12.08.92 Bulletin 92/33**

(84) Designated Contracting States: **AT BE CH DE ES FR GB GR IT LI LU NL SE**

(56) References cited: **GB-A- 2 087 887**

(73) Proprietor: **MAY & BAKER LIMITED**

**Dagenham Essex RM10 7XS(GB)**

(72) Inventor: **Hewett, Richard Henry**
**May & Baker Limited**
**Dagenham Essex, RM10 7XS(GB)**
Inventor: **Luscombe, Brian Malcolm**
**May & Baker Limited**
**Dagenham Essex, RM10 7XS(GB)**

(74) Representative: **Bentham, Stephen et al**
**J.A. Kemp & Co. 14 South Square Gray's Inn**
**London WC1R 5EU(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to new herbicidal compositions comprising N-(2,4-difluorophenyl)-2-(3-trifluoromethylphenoxy)nicotinamide of formula I depicted hereinafter, which is disclosed in the specification of British Patent No. 2087887B as a pre-and/or post-emergence herbicide, and to their use in agriculture.

Flamprop - i.e.
2-(N-benzoyl-3-chloro-4-fluoroanilino)propionic acid - and its enantiomeric forms and its agriculturally acceptable salts and esters, especially flamprop-methyl [methyl (±)-2-(N-benzoyl-3-chloro-4-fluoroanilino)-propionate] and flamprop-isopropyl (R)-isomer, known as flamprop-M-isopropyl [isopropyl (R)-2-(N-benzoyl-3-chloro-4-fluoroanilino)propionate], are used on a large scale for post-emergence grass weed control in cereal crops.

In this specification, where the context so permits, the term "flamprop" is meant to embrace the parent acid (acid equivalent) or an agriculturally acceptable salt or ester thereof, preferably a metal or amine salt or a straight- or branched-chain alkyl ester thereof containing from 1 to 10 carbon atoms in the alkyl moiety, more especially the methyl ester of the racemate, flamprop-methyl, and the isopropyl ester of the (R)-enantiomer, which is known as flamprop-M-isopropyl.

Owing to lack of residual activity in the soil flamprop does not control the weeds which emerge after application.

Flamprop has no useful activity against broad-leaf weeds.

As a result of research and experimentation it has now been discovered that the use of the compound N-(2,4-difluorophenyl)-2-(3-trifluoromethylphenoxy)nicotinamide (hereinafter referred to as diflufenican) in combination with flamprop adds to the capabilities of the flamprop:-

(a) control of a wide spectrum of broad-leaf weeds by both foliar activity and residual soil activity, and

(b) residual control of annual grass weeds such as Alopecurus myosuroides, Apera spica-venti, Digitaria sanguinalis, Echinochloa crus-galli, Poa annua and Poa trivialis.

In addition to this, it has been found that the combined herbicidal activity of combinations of diflufenican with flamprop against certain broad-leaf weed species is greater than expected when applied post-emergence (e.g. as a post-emergence spray), i.e. the herbicidal activity of combinations of diflufenican with flamprop showed an unexpected degree of synergism [as defined by P.M.L. Tammes, Netherlands Journal of Plant Pathology, 70 (1964), pp 73-80 in a paper entitled "Isoboles, a graphic representation of synergism in pesticides"].

The remarkable synergistic effect of the mixture applied post-emergence gives improved reliability of control of weed species occurring in cereal cultures and allows for a reduction in the amount of active ingredient employed.

Accordingly the present invention provides a method for the control of the growth of weeds at a cereal crop locus which comprises applying to the locus, post-emergence of the weeds, (a) from 125 to 1000 g, preferably from 400 to 750 g, acid equivalent (a.e.)/ha of flamprop, an agriculturally acceptable salt or ester thereof, preferably a metal or amine salt or a straight- or branched-chain alkyl ester thereof containing from 1 to 10 carbon atoms in the alkyl moiety, and (b) from 25 to 250 g/ha of diflufenican in which method the acid equivalent weight ratio of (a) to (b) is from 40:1 to 1:2, and preferably from 30:1 to 1.6:1 in order to obtain a synergistic effect. Alkyl esters containing from 1 to 10 carbon atoms in the alkyl moiety are preferred. The method of the invention may be used to control a broad spectrum of weed species in cereal crops, e.g. wheat or barley by application pre- or post-emergence of the crop without significant permanent damage to the crop. The combined use described above provides both foliar and residual activity.

In the present invention (a) is preferably flamprop-M, or an agriculturally acceptable salt or ester thereof, or a mixture thereof with the other enantiomeric form of flamprop.

According to a further feature of the invention there is provided a method for the control of weeds at a cereal crop locus which comprises the application to the locus, post-emergence of the weeds, of (a) flamprop-methyl and (b) diflufenican at application rates of from 250 to 1000 g/ha of (a) and from 25 to 250 g/ha of (b), in proportions of 40:1 to 1:1 w/w of (a) to (b).

According to a preferred feature of the invention there is provided a method for the control of weeds at a cereal crop locus which comprises the application to the locus, post-emergence of the weeds, of (a) flamprop-M-isopropyl and (b) diflufenican at application rates of from 250 to 1000 g/ha of (a) and from 25 to 250 g/ha of (b), in proportions of 40:1 to 1:1 w/w of (a) to (b).

By the term 'post- emergence application', unless otherwise specified, is meant application to the aerial or exposed portions of the weeds which have emerged above the surface of the soil. By the term 'foliar activity' is meant herbicidal activity produced by application to the aerial or exposed portions of the weeds which have emerged above the surface of the soil. By the term 'residual activity' is meant herbicidal activity

produced by application to the soil in which weed seeds or seedlings are present before emergence of the weeds above the surface of the soil, whereby seedlings present at the time of application or which germinate subsequent to application from seeds present in the soil, are controlled.

Weeds that may be controlled by the method include:- from broad-leaf weeds, Abutilon theophrasti, Amaranthus retroflexus, Amsinckia intermedia, Anagallis arvensis, Anthemis arvensis, Anthemis cotula, Atriplex patula, Brassica nigra, Capsella bursa-pastoris, Chenopodium album, Cirsium arvense, Datura stramonium, Galeopsis tetrahit, Galium aparine, Lamium amplexicaule, Lamium purpureum, Matricaria inodora, Myosotis arvensis, Papaver rhoeas, Plantago lanceolata, Polygonum spp. (e.g. Polygonum aviculare, Polygonum convolvulus and Polygonum persicaria), Portulaca oleracea, Raphanus raphanistrum, Senecio vulgaris, Sesbania florida, Sida spinosa, Silene alba, Sinapis arvensis, Solanum nigrum, Stellaria media, Thlaspi arvense, Urtica urens, Veronica hederifolia, Veronica persica and Viola arvensis, and from grass weeds, Alopecurus myosuroides, Apera spica-venti, Agrostis stolonifera, Avena spp. (e.g. Avena fatua, Avena ludoviciana), Lolium multiflorum, Poa annua, Poa trivialis, Digitaria sanguinalis, Echinochloa crus-galli, Eleusine indica, Setaria faberii and Setaria viridis.

In accordance with usual practice, a tank mix may be prepared prior to use by combining separate formulations of the individual herbicidal components, or separate formulations may be applied in a time-separated manner.

The following greenhouse experiments illustrate the present invention by demonstrating the synergistic activity of flamprop and diflufenican in controlling the growth of Stellaria media and Galium aparine.

## EXPERIMENT 1

### Greenhouse experiment showing the nature of biological synergism between flamprop-methyl and diflufenican

A wide range of doses of flamprop-methyl, i.e. 250, 500 and 1000 g/ha (prepared from the commercial emulsifiable concentrate "Mataven" containing 84 g/l), and of diflufenican, i.e. 31.25, 62.5, 125, 250, 500 and 1000 g/ha (in a composition according to Example 1 as described hereinafter), were applied at a spray volume of 290 l/ha to sets of four replicate 7 cm square pots of loam soil each planted with 2 Stellaria media plants with 4 pairs of leaves and branches initiated at the nodes or 3 Galium aparine plants with 2-3 whorls and branches initiated at the nodes. After spraying, the pots were arranged in randomised blocks in a greenhouse, watered as necessary, and assessed after 14 days for percentage phytotoxicity (reduction in green area compared with unsprayed plants) (0 = no effect, 100 = complete destruction).

From these results the $ED_{50}$ values (effective dose giving 50% phytotoxicity) or $ED_{90}$ values (effective dose giving 90% phytotoxicity) in grams of diflufenican per hectare, for Stellaria media and Galium aparine respectively, were calculated for diflufenican alone and for diflufenican with increasing rates of flamprop-methyl.

Flamprop-methyl applied alone was found to have no activity on Stellaria media and Galium aparine.

The $ED_{50}$ values for Stellaria media were as follows:-

| | $ED_{50}$ |
|---|---|
| Diflufenican alone | 1094 |
| Diflufenican with 250 g flamprop-methyl/ha | 138 |
| Diflufenican with 500 g flamprop-methyl/ha | 67 |
| Diflufenican with 1000 g flamprop-methyl/ha | 40 |

and the $ED_{90}$ values for Galium aparine were:-

| | $ED_{90}$ |
|---|---|
| Diflufenican alone | 788 |
| Diflufenican with 250 g flamprop-methyl/ha | 128 |
| Diflufenican with 500 g flamprop-methyl/ha | 296 |
| Diflufenican with 1000 g flamprop-methyl/ha | 115 |

## EXPERIMENT 2

Greenhouse experiment showing the nature of biological synergism between (R)-flamprop-isopropyl and diflufenican

A similar experiment to that hereinbefore described in Experiment 1 was carried out with (R)-flamprop-isopropyl (prepared from the commercial 20% w/v emulsifiable concentrate "Commando") being applied to pots each planted with 3 Stellaria media plants with 3 pairs of leaves and branches initiated at the nodes or 3 Galium aparine plants with 2-3 whorls and branches initiated at the nodes.

(R)-Flamprop-isopropyl applied alone was found to have no activity on Stellaria media and Galium aparine.

The $ED_{50}$ values for Stellaria media were as follows:-

| | $ED_{50}$ |
|---|---|
| Diflufenican alone | 176 |
| Diflufenican with 250 g (R)-flamprop-isopropyl/ha | 44 |
| Diflufenican with 500 g (R)-flamprop-isopropyl/ha | 24 |
| Diflufenican with 1000 g (R)-flamprop-isopropyl/ha | 20 |

and the $ED_{90}$ values for Galium aparine were:-

| | $ED_{90}$ |
|---|---|
| Diflufenican alone | 888 |
| Diflufenican with 250 g (R)-flamprop-isopropyl/ha | 282 |
| Diflufenican with 500 g (R)-flamprop-isopropyl/ha | 339 |
| Diflufenican with 1000 g (R)-flamprop-isopropyl/ha | 97 |

The results from Experiments 1 and 2 were then used to plot isoboles with a "one-sided effect" according to the methods of P.M.L. Tammes, op. cit. The isoboles produced, shown hereinafter in Figures I, II, III and IV, were clearly type II curves (Tammes, op. cit., page 74), characteristic of synergism.

According to a further feature of the present invention, there is provided a product comprising (a) flamprop, or an agriculturally acceptable salt or ester thereof, preferably a metal or amine salt or a straight- or branched-chain alkyl ester thereof containing from 1 to 10 carbon atoms in the alkyl moiety, and (b) diflufenican, in which the acid equivalent weight ratio of (a) to (b) is from 40:1 to 1:2, as a combined preparation for simultaneous, separate or sequential use in order to obtain a synergistic effect in controlling the growth of weeds at a cereal crop locus.

According to a feature of the present invention, there are provided compositions suitable for herbicidal use comprising (a) flamprop, or an agriculturally acceptable salt or ester thereof, preferably a metal or amine salt or a straight- or branched-chain alkyl ester thereof containing from 1 to 10 carbon atoms in the alkyl moiety, and (b) diflufenican, in proportions of 40:1 to 1:2, preferably 30:1 to 1.6:1, w/w of acid equivalent (a) to (b) in association with, and preferably homogeneously dispersed in, a herbicidally-acceptable diluent or carrier and/or surface-active agent. Suitable diluents or carriers or surface-active agents are of the type generally accepted in the art as being suitable for use in herbicidal compositions and which are compatible with flamprop and diflufenican. The term "homogeneously dispersed" is used to include compositions in which flamprop and diflufenican are dissolved in the other components. The term "herbicidal compositions" is used in a broad sense to include not only compositions which are ready for use as herbicdes but also concentrates which must be diluted before use. Preferably, the compositions contain from 0.05 to 90% by weight of flamprop and diflufenican.

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, products based on condensates of ethylene oxide with nonyl- or octyl- phenols, or carboxylic acid esters of anhydrosorbitols which have been rendered soluble by etherification of the free hydroxy groups by condensation with ethylene oxide, alkali and alkaline earth metal salts or sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding flamprop and diflufenican with solid diluents or by impregnating the solid diluents or carriers with solutions of flamprop and diflufenican in volatile solvents, evaporating the solvents and, if necessary, grinding the

products so as to obtain powders. Granular formulations may be prepared by absorbing flamprop and diflufenican (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of flamprop and diflufenican may be used in the form of self-emulsifyng concentrates containing the active substances dissolved in the emulsifying agents or in solvents containing emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are aqueous suspension concentrates which comprise from 10 to 70% w/v of flamprop and diflufenican, from 2 to 10% w/v of surface-active agent, from 0.1 to 5% w/v of thickener and from 15 to 87.9% by volume of water; wettable powders which comprise from 10 to 90% w/w of flamprop and diflufenican, from 2 to 10% w/w of surface-active agent and from 8 to 88% w/w of solid diluent or carrier; liquid water dispersible concentrates which comprise from 10 to 30% w/v of flamprop and diflufenican, from 5 to 25% w/v of surface-active agent and from 45 to 85% by volume of water-miscible solvent, e.g. dimethylformamide; liquid emulsifiable suspension concentrates which comprise 10 to 70% w/v of flamprop and diflufenican, from 5 to 15% w/v of surface-active agent, from 0.1 to 5% w/v of thickener and from 10 to 84.9% by volume of organic solvent; granules which comprise from 2 to 10% w/w of flamprop and diflufenican, from 0.5 to 2% w/w of surface-active agent and from 88 to 97.5% w/w of granular carrier and emulsifiable concentrates which comprise from 0.05 to 90% w/v, and preferably from 1 to 60% w/v, of flamprop and diflufenican, from 0.01 to 10% w/v, and preferably from 1 to 10% w/v, of surface-active agent and from 9.99 to 99.94%, and preferably from 39 to 98.99%, by volume of organic solvent.

Herbicidal compositions according to the present invention may also comprise flamprop and diflufenican in association with, and preferably homogeneously dispersed in, one or more other pesticidally active compounds and, if desired, one or more compatible pesticidally acceptable diluents or carriers, surface-active agents and conventional adjuvants as hereinbefore described. Examples of other pesticidally active compounds which may be included in, or used in conjunction with, the herbicidal compositions of the present invention include herbicides, for example to increase the range of weed species controlled, for example chlortoluron [N′-(3-chloro-4-methylphenyl)-N,N-dimethylurea], cyanazine [2-chloro-4-(1-cyano-1-methylethylamino)-6-ethylamino-1,3,5-triazine], diuron [N-′(3,4-dichlorophenyl)-N,N-dimethylurea], isoproturon [N′-(4-isopropylphenyl)-N,N-dimethylurea], linuron [N′-(3,4-dichlorophenyl)-N-methoxy-N-methylurea], bromoxynil [4-hydroxy-3,5-dibromobenzonitrile] and ioxynil [4-hydroxy-3,5-diiodobenzonitrile]; insecticides, e.g. carbaryl [naphth-1-yl N-methylcarbamate] and synthetic pyrethroids, e.g. permethrin and cypermethrin; and fungicides, e.g. 2,6-dimethyl-4-tridecyl-morpholine, methyl N-(1-butylcarbamoylbenzimidazol-2-yl)carbamate, 1,2-bis-(3-methoxycarbonyl-2-thioureido)benzene, isopropyl 1-carbamoyl-3-(3,5-dichlorophenyl)hydantoin and 1-(4-chlorophenoxy)-3,3,-dimethyl-1-(1,2,4-triazol-1-yl)butan-2-one. Other biologically active materials which may be included in, or used in conjunction with, the herbicidal compositions of the present invention are plant growth regulators, e.g. (2-chloroethyl)-trimethylammonium chloride and 2-chloroethanephosphonic acid; and fertilizers containing, for example, nitrogen, potassium and phosphorus and trace elements known to be essential to successful plant life, e.g. iron, magnesium, zinc, manganese, cobalt and copper.

Pesticidally active compounds and other biologically active materials which may be included in, or used

in conjunction with, the herbicidal compositions of the present invention, for examples those hereinbefore mentioned, and which are acids, may, if desired, be utilized in the form of conventional derivatives, for example alkali metal and amine salts and esters.

The compositions of the invention may be made up as an article of manufacture comprising flamprop and diflufenican and optionally other biologically active compounds as hereinbefore described or, as is preferred, a herbicidal composition as hereinbefore described, and preferably a herbicidal concentrate which must be diluted before use, comprising flamprop and diflufenican within a container for the aforesaid flamprop and diflufenican or a said herbicidal composition, and instructions physically associated with the aforesaid container setting out the manner in which the aforesaid flamprop and diflufenican or herbicidal composition contained therein is to be used to control the growth of weeds. The containers will normally be of the types conventionally used for the storage of chemical substances which are solids at normal ambient temperatures and herbicidal compositions, particularly in the form of concentrates, for example cans and drums of metal, which may be internally-lacquered, and plastics materials, bottles of glass and plastics materials and, when the contents of the container is a solid, for example granular herbicidal compositions, boxes, for example of cardboard, plastics materials and metal, or sacks. The containers will normally be of sufficient capacity to contain amounts of the active ingredients or herbicidal compositions sufficient to treat at least 0.5 hectares of ground to control the growth of weeds therein but will not exceed a size which is convenient for conventional methods of handling. The instructions will be physically associated with the container, for example by being printed directly thereon or on a label or tag affixed thereto. The directions will normally indicate that the contents of the container, after dilution if necessary, are to be applied to control the growth of weeds at rates of application from 125 g to 1000 g a.e. of flamprop and between 25 g and 250 g of diflufenican per hectare in the manner and for the purposes hereinbefore described.

The following Examples illustrate herbicidal compositions according to the present invention.

## EXAMPLE 1

An aqueous suspension concentrate was made from

| | |
|---|---|
| diflufenican | 50% w/v |
| propylene glycol | 5% w/v |
| Olin 10G (para-nonylphenoxy polyglycidol) | 0.67% w/v |
| Soprophor FL (triethanolamine salt of oxyethylated polyarylphenolphosphate) | 1.33% w/v |
| Antifoam FD (silicone antifoam) | 0.01% v/v |
| Rhodigel 23 (xanthan gum) | 0.2% w/v |
| dichlorophen sodium solution, 40% w/w | 0.25% w/v |
| water | to 100% by volume |

by blending the diflufenican with an aqueous solution of the Soprophor FL, Antifoam FD and Olin 10G and milling through a bead-mill. An aqueous solution of the Rhodigel 23, dichlorophen sodium solution and propylene glycol is then blended with the milled slurry and made up to volume with water.

EXAMPLE 2

An emulsifiable concentrate was formed from:-

| | |
|---|---|
| flamprop-isopropyl (R)-isomer | 30% w/v |
| Soprophor BSU (tristyryl phenol/ ethylene oxide condensate containing 18 moles of ethylene oxide) | 3% w/v |
| Arylan CA (calcium dodecyl benzene sulphonate 70% solution in butanol) | 5% w/v |
| Solvesso 150 (aromatic C10 petroleum fraction) | to 100% by volume |

by adding with stirring the (R)-flamprop-isopropyl to a solution of the Soprophor BSU and Arylan CA in some of the Solvesso 150. When fully dissolved, further Solvesso 150 is added to volume.

EXAMPLE 3

An emulsifiable concentrate was formed from:-

| | |
|---|---|
| diflufenican | 2% w/v |
| flamprop-isopropyl (R)-isomer | 16% w/v |
| Soprophor BSU | 3% w/v |
| Arylan CA | 5% w/v |
| cyclohexanone | 25% w/v |
| Solvesso 150 | to 100% by volume |

by adding with stirring the diflufenican and (R)-flamprop-isopropyl to a solution of the Soprophor BSU and Arylan CA in the cyclohexanone. When fully dissolved, Solvesso 150 is added to volume.

Five litres of the resulting formulation were diluted in 200 litres of water and applied post-emergence to 1 hectare of winter wheat to control Stellaria media, Veronica persica, Viola arvensis and Avena fatua.

EXAMPLE 4

A 40:1 mixture was formed by tank mixing 3.3 l of the composition of Example 2 with 50 ml of the composition of Example 1 in a volume of 200 l of water. The resulting spray fluid was applied to one hectare of winter wheat to control Avena fatua and Viola arvensis.

EXAMPLE 5

A 1:1 mixture was formed by tank mixing 833 ml of the composition of Example 2 with 500 ml of the composition of Example 1 in a volume of 200 l of water. The resulting spray fluid was applied to one hectare of winter wheat to control Avena fatua, Poa annua, Viola arvensis, Veronica hederifolia and Galium aparine.

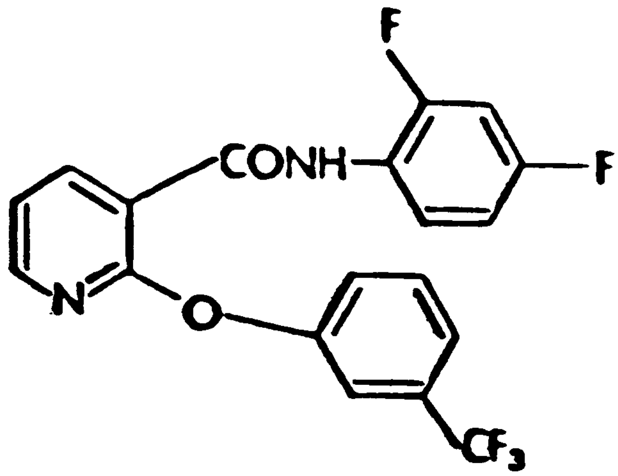

I

## Claims

1. A method of controlling the growth of weeds at a cereal crop locus which comprises applying to the locus, post-emergence of the weeds, (a) from 125 to 1000 g acid equivalent/ha of flamprop, which is 2-(N-benzoyl-3-chloro-4-fluoroanilino)propionic acid, or an agriculturally acceptable salt or ester thereof, and (b) from 25 to 250 g/ha of diflufenican which is N-(2,4-difluorophenyl)-2-(3-trifluoromethylphenoxy)-nicotinamide in which method the acid equivalent weight ratio of (a) to (b) is from 40:1 to 1:2 in order to obtain a synergistic effect.

2. A method according to claim 1 in which (a) is flamprop-M which is the (R)-enantiomer of flamprop, or an agriculturally acceptable salt or ester thereof, or a mixture thereof with the other enantiomeric form of flamprop.

3. A method according to claim 2 in which (a) is an alkyl ester of flamprop containing from 1 to 10 carbon atoms in the alkyl moiety.

4. A method according to claim 3 in which the weight ratio of (a) to (b) is from 40:1 to 1:1 and in which (a) is the isopropyl ester of flamprop-M and is applied to the locus at a rate of from 250 to 1000 g/ha and (b) at a rate of from 25 to 250 g/ha.

5. A method according to claim 1 in which the weight ratio of (a) to (b) is from 40:1 to 1:1 and in which (a) is the methyl ester of flamprop and is applied to the locus at a rate of from 250 to 1000 g/ha and (b) at a rate of from 25 to 250 g/ha.

6. A product comprising
(a) flamprop, which is 2-(N-benzoyl-3-chloro-4-fluoroanilino)propionic acid, or an agriculturally acceptable salt or ester thereof, and
(b) diflufenican which is N-(2,4-difluorophenyl)-2-(3-trifluoromethylphenoxy)nicotinamide, in which the acid equivalent weight ratio of (a) to (b) is from 40:1 to 1:2 as a combined preparation for simultaneous, separate or sequential use in order to obtain a synergistic effect in controlling the growth of weeds at a cereal crop locus.

7. A product according to claim 6 in which (a) is flamprop-M which is the (R)-enantiomer of flamprop, or an agriculturally acceptable salt or ester thereof, or a mixture thereof with the other enantiomeric form of flamprop.

8. A product according to claim 6 to 7 in which (a) is flamprop-M-isopropyl or flamprop-methyl.

9. A herbicidal composition which comprises (a) flamprop, which is 2-(N-benzoyl-3-chloro-4-fluoroanilino)-

propionic acid, or an agriculturally acceptable salt or ester thereof, and (b) diflufenican in which the acid equivalent weight ratio of (a) to (b) is from 40:1 to 1:2 in association with a herbicidally acceptable diluent or carrier and/or surface active agent.

**10.** A herbicidal composition according to claim 9 in which (a) is flamprop-M which is the (R)-enantiomer of flamprop, or an agriculturally acceptable salt or ester thereof, or a mixture thereof with the other enantiomeric form of flamprop.

**11.** A herbicidal composition according to claim 9 or 10 in which (a) is an alkyl ester of flamprop containing from 1 to 10 carbon atoms in the alkyl moiety.

**12.** A herbicidal composition according to claim 11 in which (a) is flamprop-M-isopropyl or flamprop-methyl.

**Revendications**

**1.** Procédé pour maîtriser le développement des mauvaises herbes en un site de culture de céréales, qui comprend l'application au site, après la levée des mauvaises herbes, de (a) 125 à 1 000 g d'équivalent d'acide/ha de flamprop, qui est l'acide 2-(n-benzoyl-3-chloro-4-fluoroanilino)propionique, ou un sel ou ester convenant en agriculture de celui-ci, et (b) 25 à 250 g/ha de diflufénican qui est le N-(2,4-difluoropnényl)-2-(3-trifluorométhylphénoxy)nicotinamide, dans lequel procédé le rapport en poids des équivalents d'acide de (a) à (b) est de 40/1 à 1/2, pour obtenir un effet synergique.

**2.** Procédé selon la revendication 1, dans lequel (a) est le flamprop-M qui est l'énantiomère (R) du flamprop, ou un sel ou ester convenant en agriculture de celui-ci, ou un de leurs mélanges avec l'autre forme énantiomère du flamprop.

**3.** Procédé selon la revendication 2, dans lequel (a) est un ester alkylique du flamprop contenant de 1 à 10 atomes de carbone dans le fragment alkyle.

**4.** Procédé selon la revendication 3, dans lequel le rapport pondéral de (a) à (b) est de 40/1 à 1/1 et dans lequel (a) est l'ester isopropylique du flamprop-M et est appliqué au site à la dose de 250 à 1 000 g/ha et (b) est appliqué à la dose de 25 à 250 g/ha.

**5.** Procédé selon la revendication 1, dans lequel le rapport pondéral de (a) à (b) est de 40/1 à 1/1 et dans lequel (a) est l'ester méthylique du flamprop et est appliqué au site à la dose de 250 à 1 000 g/ha et (b) est appliqué à la dose de 25 à 250 g/ha.

**6.** Produit comprenant

(a) du flamprop, qui est l'acide 2-(N-benzoyl-3-chloro-4-fluoroanilino)propionique, ou un sel ou ester convenant en agriculture de celui-ci, et

(b) du diflufénican qui est le N-(2,4-difluorophényl)-2-(3-fluorométhylphénoxy)nicotinamide,

dans lequel le rapport en poids des équivalents d'acide de (a) à (b) est de 40/1 à 1/2, sous forme d'une préparation combinée pour l'application simultanée, séparée ou successive, afin d'obtenir un effet synergique dans la maîtrise du développement des mauvaises herbes en un site de culture de céréales.

**7.** Produit selon la revendication 6, dans lequel (a) est le flamprop-M qui est l'énantiomère (R) du flamprop, ou un sel ou ester convenant en agriculture de celui-ci, ou un mélange de ceux-ci avec l'autre forme énantiomère du flamprop.

**8.** Produit selon les revendications 6 et 7, dans lequel (a) est le flamprop-M-isopropyle ou le flamprop-méthyle.

**9.** Composition herbicide qui comprend (a) du flamprop, qui est l'acide 2-(N-benzoyl-3-chloro-4-fluoroanilino)propionique, ou un sel ou ester convenant en agriculture de celui-ci, et (b) du diflufénican, dans lequel le rapport en poids des équivalents d'acide de (a) à (b) est de 40/1 à 1/2, en association avec un diluant ou support et/ou agent tensio-actif convenant en agriculture.

10. Composition herbicide selon la revendication 9, dans laquelle (a) est le flamprop-M qui est l'énantiomère (R) du flamprop, ou un sel ou ester convenant en agriculture de celui-ci, ou un de leurs mélanges avec l'autre forme énantiomère du flamprop.

11. Composition herbicide selon la revendication 9 ou 10, dans laquelle (a) est un ester alkylique du flamprop contenant de 1 à 10 atomes de carbone dans le fragment alkyle.

12. Composition herbicide selon la revendication 11, dans laquelle (a) est le flamprop-M-isopropyle ou le flamprop-méthyle.

## Patentansprüche

1. Verfahren zur Bekämpfung des Unkrautwachstums in Getreidekulturen durch Applikation oder Ausbringen (an den Jeweiligen Ort) nach dem Unkrautaustrieb von
   (a) 125 - 1000 g Säureäquivalent/ha Flamprop, d.h. 2-(N-Benzoyl-3-chlor-4-fluoranilino)-propionsäure oder eines aus landwirtschaftlichen Gesichspunkten akzeptablen Salzes oder Esters derselben und
   (b) 25 - 250 g/ha Diflufenican, d.h. N-(2,4-Difluorphenyl)-2-(3-trifluormethylphenoxy)-nictoinamid, wobei zur Herbeiführung eines synergistischen Effekts das Säureäquivalentgewichtsverhältnis (a)/(b) 40/1 bis 1/2 beträgt.

2. Verfahren nach Anspruch 1, dadurch gekennzeichnet, daß (a) aus Flamprop-M, d.h. dem (R)-Enantiomeren von Flamprop, oder einem aus landwirtschaftlichen Gesichtspunkten akzeptablen Salz oder Ester hiervon oder einer Mischung hiervon mit der anderen enantiomeren Form von Flamprop besteht.

3. Verfahren nach Anspruch 2, dadurch gekennzeichnet, daß (a) aus einem Alkylester von Flamprop mit 1 bis 10 Kohlenstoffatom(en) in der Alkyleinheit besteht.

4. Verfahren nach Anspruch 3, dadurch gekennzeichnet, daß das Gew.-Verhältnis (a)/(b) 40/1 bis 1/1 beträgt, daß (a) aus dem Isopropylester von Flamprop-M besteht und daß an dem jeweiligen Ort (a) in einer Menge von 250 - 1000 g/ha und (b) in einer Menge von 25 - 250 g/ha appliziert werden.

5. Verfahren nach Anspruch 1, dadurch gekennzeichnet, daß das Gew.-Verhältnis (a)/(b) 40/1 bis 1/1 beträgt, daß (a) aus dem Methylester von Flamprop besteht und daß an dem jeweiligen Ort (a) in einer Menge von 250 - 1000 g/ha und (b) in einer Menge von 25 - 250 g/ha ausgebracht werden.

6. Produkt, umfassend
   (a) Flamprop, d.h. 2-(N-Benzoyl-3-chlor-4-fluoranilino)propionsäure oder ein(en) aus landwirtschaftlichen Gesichtspunkten akzeptables (akzeptablen) Salz oder Ester hiervon und
   (b) Diflufenican, d.h. N-(2,4-Difluorphenyl)-2-(3-trifluormethylphenoxy)-nicotinamid, wobei das Säureäquivalentgewichtsverhältnis (a)/(b) 40/1 bis 1/2 beträgt,
   als Kombinationspräparat zum gleichzeitigen, getrennten oder aufeinanderfolgenden Gebrauch für die Erzielung eines synergistischen Effekts bei der Bekämpfung des Wachstums von Unkräutern in Getreidekulturen.

7. Produkt nach Anspruch 6, dadurch gekennzeichnet, daß (a) aus Flamprop-M, d.h. dem (R)-Enantiomeren von Flamprop, oder einem aus landwirtschaftlichen Gesichtspunkten akzeptablen Salz oder Ester hiervon oder einer Mischung hiervon mit der anderen enantiomeren Form von Flamprop besteht.

8. Produkt nach Anspruch 6 oder 7, dadurch gekennzeichnet, daß (a) aus Flamprop-M-isopropyl oder Flamprop-methyl besteht.

9. Herbizid, enthaltend
   (a) Flamprop, d.h. 2-(N-Benzoyl-3-chlor-4-fluoranilino)propionsäure oder ein(en) aus landwirtschaftlichen Gesichtspunkten akzeptables (akzeptablen) Salz oder Ester hiervon und
   (b) Diflufenican,
   wobei das Säureäquivalentgewichtsverhältnis (a)/(b) 40/1 bis 1/2 beträgt,
   in Verbindung mit einem herbizidakzeptablen Verdünnungsmittel oder Träger und/oder oberflächenaktiven Mittel.

**10.** Herbizid nach Anspruch 9, dadurch gekennzeichnet, daß (a) aus Flamprop-M, d.h. dem (R)-Enantiomeren von Flamprop, oder einem aus landwirtschaftlichen Gesichtspunkten akzeptablen Salz oder Ester hiervon oder einer Mischung hiervon mit der anderen enantiomeren Form von Flamprop besteht.

**11.** Herbizid nach Anspruch 9 oder 10, dadurch gekennzeichnet, den (a) aus einem Alkylester von Flamprop mit 1 bis 10 Kohlenstoffatom(en) in der Alkyleinheit besteht.

**12.** Herbizid nach Anspruch 11, dadurch gekennzeichnet, daß (a) aus Flamprop-H-isopropyl oder Flamprop-methyl besteht.

FIGURE I

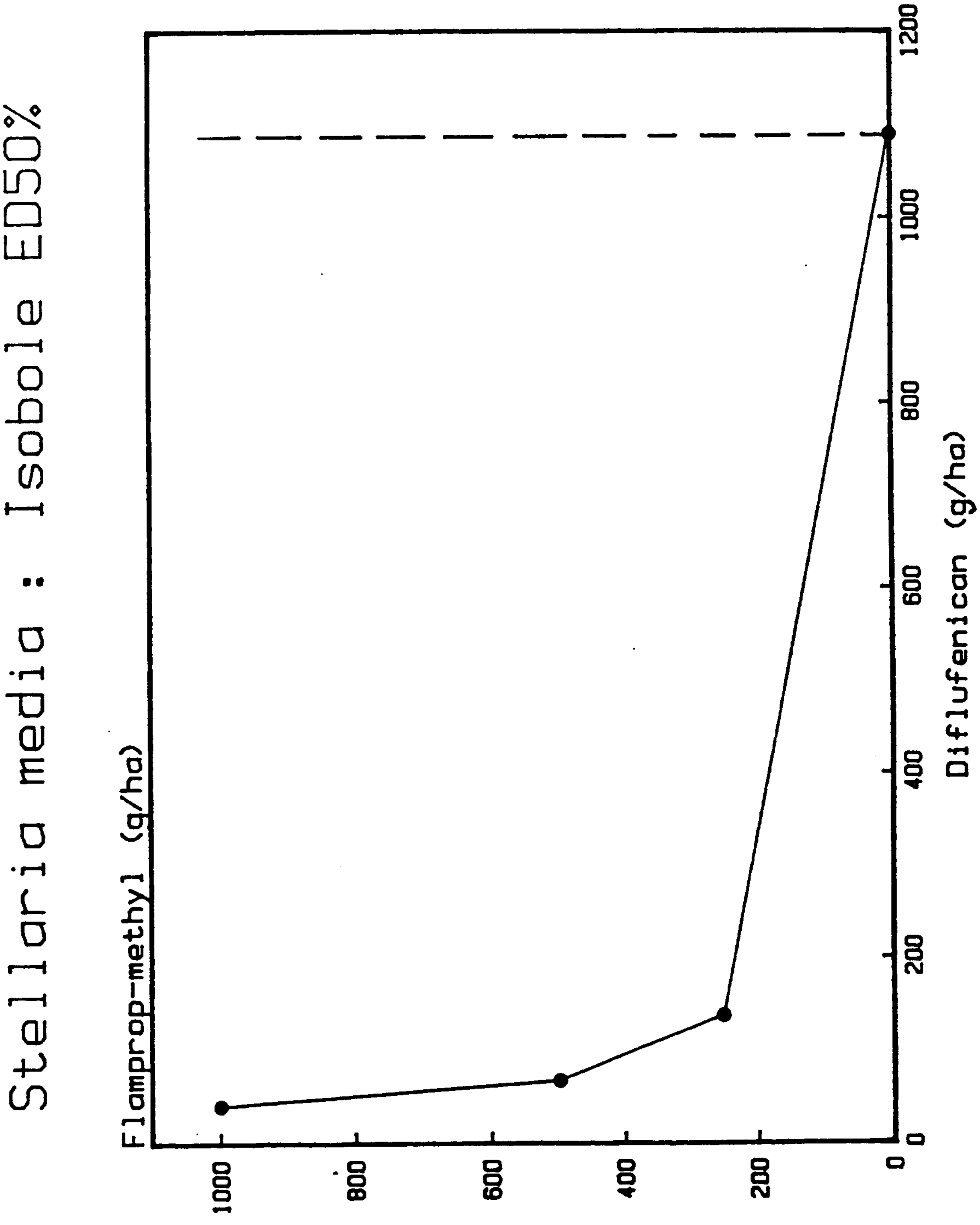
Stellaria media : Isobole ED50%
Flamprop-methyl (g/ha)
1000
800
600
400
200
0
Diflufenican (g/ha)
0
200
400
600
800
1000
1200

FIGURE II

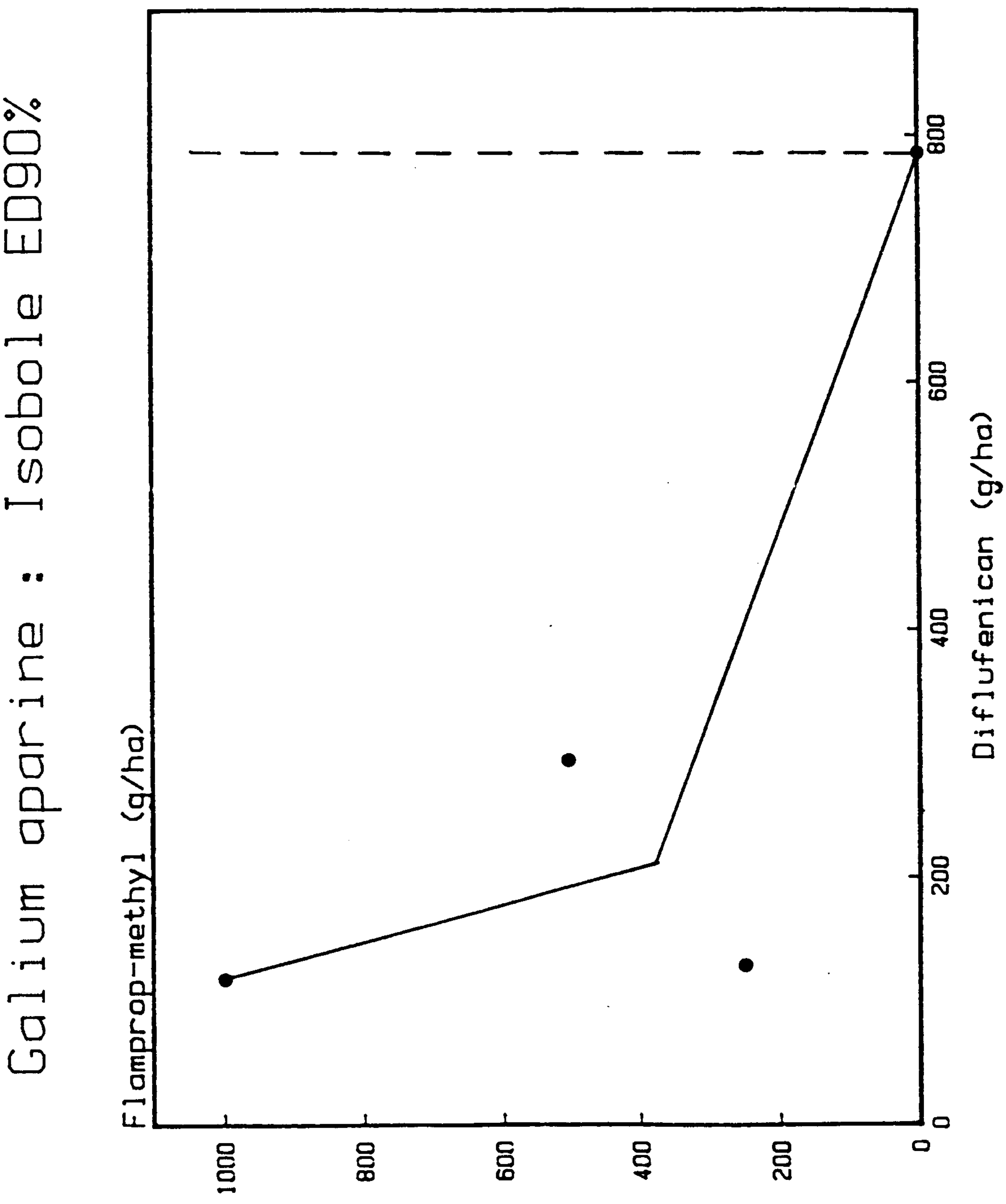
Galium aparine : Isobole ED90%
Flamprop-methyl (g/ha)
Diflufenican (g/ha)
0
200
400
600
800
1000
0
200
400
600
800

FIGURE III

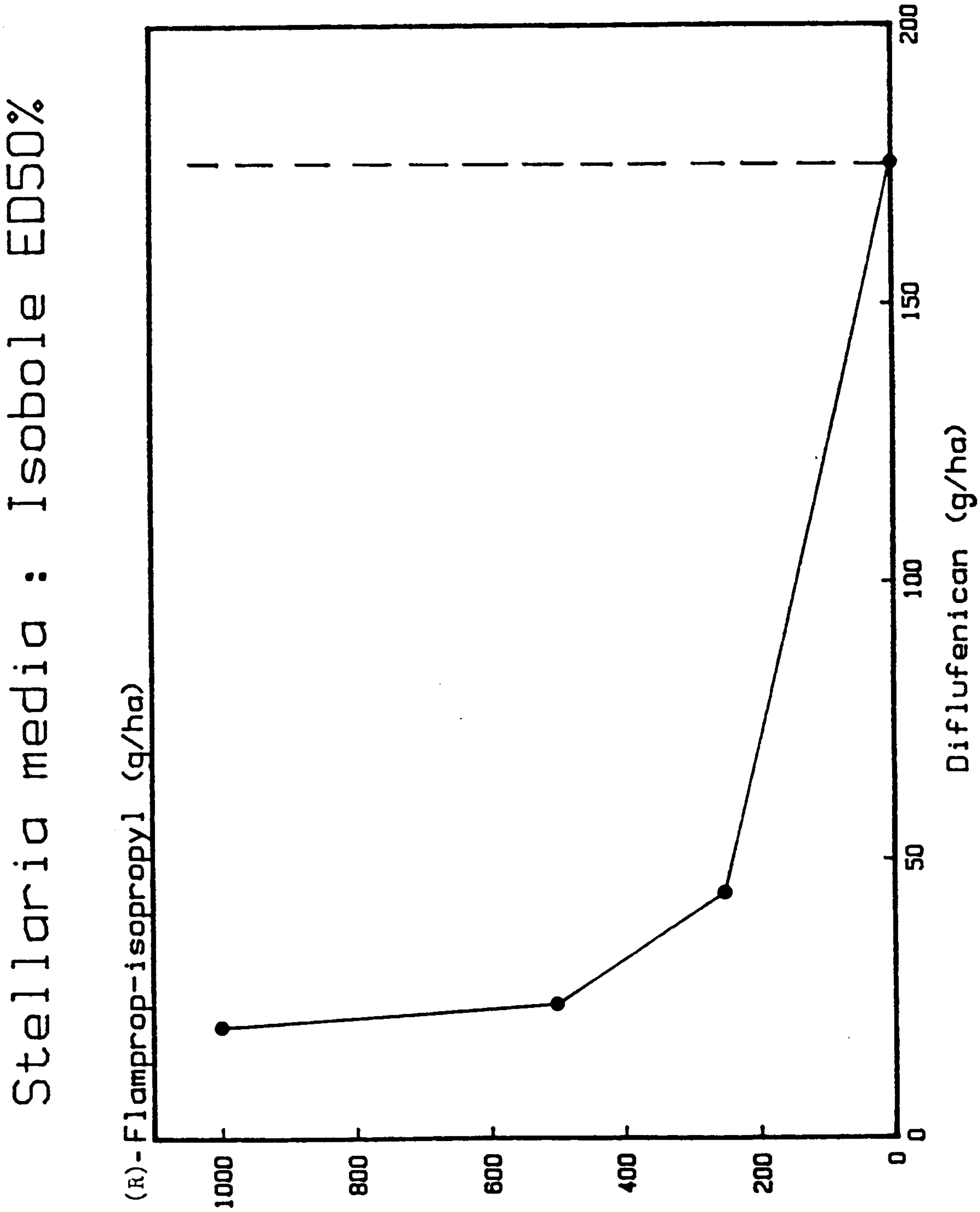
Stellaria media : Isobole ED50%
(R)-Flamprop-isopropyl (g/ha)
1000
800
600
400
200
0
Diflufenican (g/ha)
0
50
100
150
200

FIGURE IV

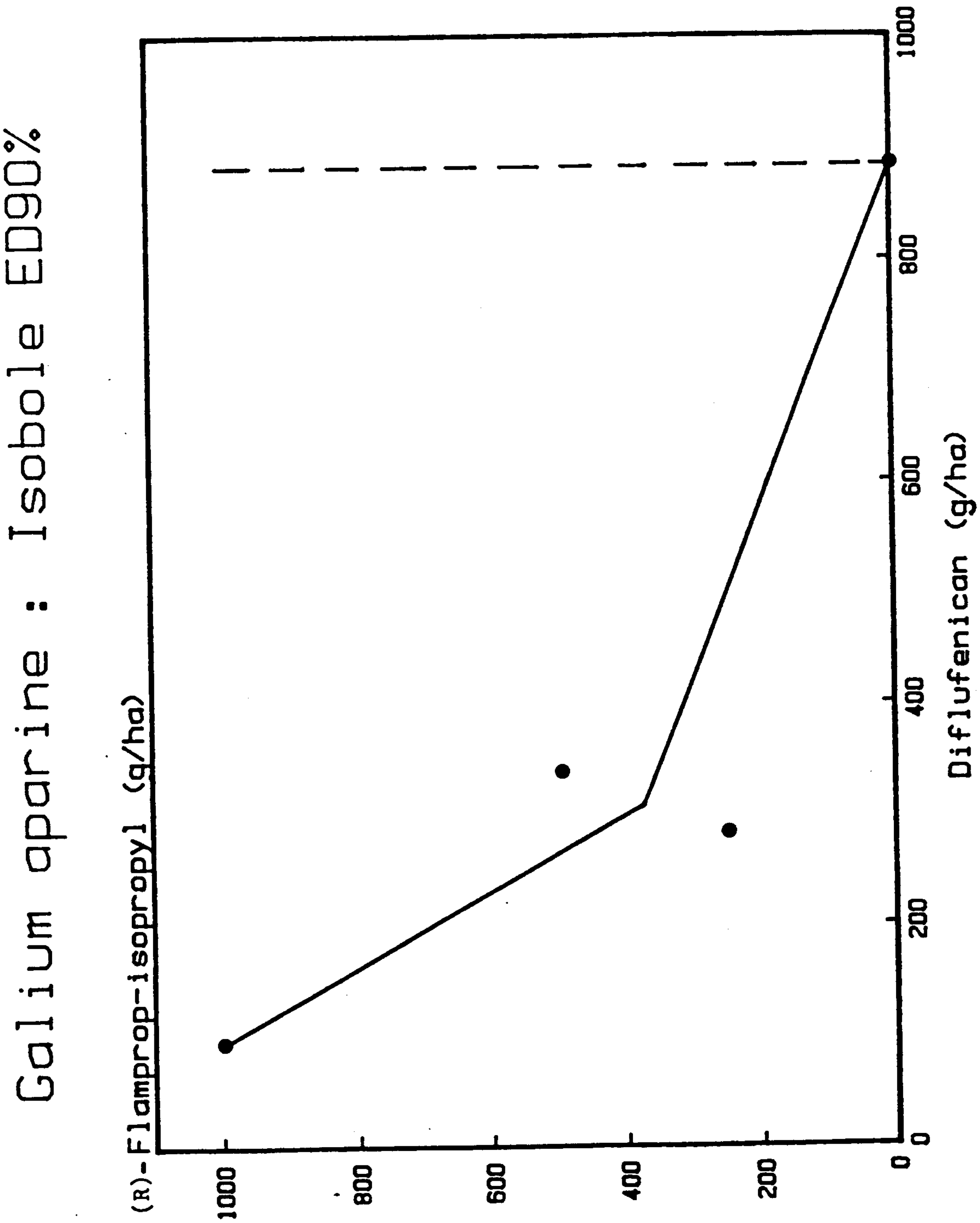
Galium aparine : Isobole ED90%
(R)-Flamprop-isopropyl (g/ha)
1000
800
600
400
200
0
Diflufenican (g/ha)
0
200
400
600
800
1000